# EUROPÄISCHE PATENTSCHRIFT

(11) **EP 0 458 010 B1**
(45) Veröffentlichungstag und Bekanntmachung des Hinweises auf die Patenterteilung: **23.11.1994**
(21) Anmeldenummer: 91101490.0
(22) Anmeldetag: 05.02.1991
(51) Int. Cl.: G01N 21/74

(54) **Verfahren und Vorrichtung zur Analyse von Proben mittels Atomabsorptions-Spektroskopie**
Procedure and equipment for analysing samples by means of atomic absorption spectroscopy
Procédé et dispositif pour l'analyse de specimens au moyen de spectroscopie par absorption atomique

(30) Priorität: 07.04.1990 DE 4011338
(43) Veröffentlichungstag der Anmeldung: 27.11.1991
(73) Patentinhaber: BODENSEEWERK PERKIN-ELMER GMBH, D-88662 Überlingen (DE)
(72) Erfinder: Tamm, Rolf, W-7777 Salem 2 (DE); Rogasch, Klaus, W-7772 Uhldingen-Mühlhofen (DE); Roedel, Guenther, W-7776 Owingen (DE)
(74) Vertreter: Grünecker, Kinkeldey, Stockmair & Schwanhäusser Anwaltssozietät

(56) Entgegenhaltungen:
- EP-A- 0 356 566
- US-A- 3 591 289
- US-A- 4 098 554
- US-A- 4 840 484

## Beschreibung

Die Erfindung betrifft ein Verfahren zur Analyse von Proben mittels Atomabsorptions-Spektroskopie mit elektrothermischer Atomisierung der Probe, mit den Verfahrensschritten:
(a) Einbringen einer flüssigen Probe in einen Ofen,
(b) Aufheizen des Ofens auf eine Trocknungstemperatur zum Trocknen der Probe,
(c) anschließendes Aufheizen der Probe auf eine Atomisierungstemperatur, bei welcher sich in dem Ofen eine Atomwolke bildet, in der die Bestandteile der Probe in atomarem Zustand vorliegen, und
(d) Messung der Atomabsorption eines durch die Atomwolke hindurchgeleiteten Meßlichtbündels mit Resonanzspektrallinien eines in der Probe gesuchten Elements, wobei
(e) während des Aufheizens des Ofens auf die Trocknungstemperatur die in dem Ofen gebildeten Dämpe durch einen Unterdruck abgesaugt werden.

Die Erfindung betrifft weiterhin eine Vorrichtung zur Durchführung eines solchen Verfahrens.

Atomabsorptions-Spektroskopie ist ein sehr empfindliches Verfahren zur quantitativen Bestimmung eines gesuchten Elementes in einer Probe. Eine Lichtquelle, z.B. eine Hohlkathodenlampe, sendet ein Lichtbündel aus, das Licht mit dem Linienspektrum eines gesuchten Elements enthält. Die Probe wird atomisiert, d.h. es wird ein Atomdampf gebildet, in welchem die Bestandteile der Probe in atomarer Form vorliegen. Durch diesen Atomdampf wird das Meßlichtbündel hindurchgeleitet. Es wird die Absorption gemessen, der das Meßlichtbündel in dem Atomdampf unterworfen ist. Aus dieser Absorption kann nach geeigneter Eichung die Konzentration des gesuchten Elementes in der Probe bestimmt werden.

Die Atomisierung der Probe kann durch "elektrothermische Atomisierung" erfolgen. Dabei wird die flüssige Probe in einen Ofen eingebracht. Der Ofen wird zunächst auf eine Trocknungstemperatur aufgeheizt. Bei dieser Trocknungstemperatur verdampft das Lösungsmittel. Anschließend erfolgt eine Aufheizung des Ofens auf eine höhere Veraschungstemperatur. Dabei werden chemische Verbindungen in der Probe aufgespalten. Es kann sich auch Rauch bilden. Schließlich wird der Ofen auf eine Atomisierungstemperatur aufgeheizt, bei welcher sich in dem Ofen eine "Atomwolke" ausbildet, in welcher die Bestandteile der Probe in atomarer Form vorliegen. Durch diese Atomwolke wird das Meßlichtbündel geleitet.

Der Ofen ist üblicherweise ein Graphitrohr. Der elektrische Strom wird entweder über ringförmige Elektroden in Längsrichtung durch dieses Graphitrohr geleitet oder über radiale Kontaktstücke in Umfangsrichtung. Um den aus Graphit bestehenden Ofen gegen Luftzutritt und Verbrennen bei den hohen Temperaturen zu schützen, ist der Ofen innen und außen von einen inerten Schutzgasstrom umspült. Dieser Schutzgasstrom führt auch das verdampfte Lösungsmittel beim Trocknen der Probe und feste Zersetzungsprodukte bei der Veraschung ab.

Es erfordert einige Zeit, bis das verdampfte Lösungsmittel und die Zersetzungsprodukte durch den Schutzgasstrom weggeführt sind. Die Trocknungs- und Veraschungsschritte dauern daher unerwünscht lange. Es besteht der Wunsch, die für eine Analyse erforderliche Zeit zu verkürzen. Dadurch können mit einem Gerät mehr Analysen pro Stunde durchgeführt werden. Außerdem erhöht sich die Lebensdauer eines Graphitofens, wenn der Graphitofen für eine Analyse nur eine kürzere Zeit erhitzt wird.

Durch die EP-A-0 356 566 ist ein Verfahren und ein Gerät zur elektrothermischen Atomisierung von Proben bekannt, bei welchem eine Probenflüssigkeit durch einen "Thermospray"-Verdampfer verdampft und als Dampfstrahl in einen Graphitofen geleitet wird. Der Graphitofen wird auf einer Trocknungstemperatur gehalten. Die Probe schlägt sich an der Wandung des Graphitofens oder einer darin vorgesehenen Plattform nieder, während das verdampfte Lösungsmittel durch einen Unterdruck abgesaugt wird. Damit läßt sich die Analysenzeit verkürzen und die Menge der bei einer Analyse atomisierten Probensubstanz und damit die Empfindlichkeit erhöhen. Der Graphitofen ist dabei ein längsbeheiztes Graphitrohr, das an seinen Enden zwischen ringförmigen Kontakten gehalten ist. Die Absaugung des Lösungsmittels erfolgt über Saugkanäle, die in diesen Kontakten gebildet und mit einer Saugpumpe verbunden sind. Dabei ist eine spezielle Anordnung mit einem Thermospray-Verdampfer erforderlich.

Aus der US-PS 48 40 484 sind ein Verfahren und ein Gerät zur elektrothermischen Atomisierung von Proben bekannt, bei dem eine Probenflüssigkeit durch eine seitliche Öffnung in das Graphitrohr der Vorrichtung eingegeben wird. In einer der sich an das Graphitrohr anschließenden Elektroden befindet sich eine weitere Öffnung, an die eine Vakuumpumpe angeschlossen ist. Nach dem Einbringen der Probe in das Graphitrohr wird die hierfür vorgesehene Öffnung luftdicht verschlossen und mit Hilfe der Vakuumpumpe während des Erhitzens der Probe ein Unterdruck erzeugt. Hierdurch wird eine Verkürzung der zum Trocknen der Probe bzw. zum Verdampfen des in der Probe enthaltenen Lösungsmittels erforderlichen Zeit erzielt. Diese Anordnung hat jedoch den Nachteil, daß sich in der verhältnismäßig kalten Elektrode Probenbestandteile, die während des Trocknens, Veraschens und Atomisierens der Probe gasförmig wurden, niederschlagen, was zur Folge hat, daß die Genauigkeit und Zuverlässigkeit nachfolgender Messungen bis zu deren Unbrauchbarkeit vermindert werden kann.

Der Erfindung liegt die Aufgabe zugrunde, bei einem Verfahren der eingangs definierten Art nicht nur die Analysendauer zu verkürzen und die Lebensdauer des Ofens zu verlängern, sondern auch die Gefahr von Probenverschleppung auszuschließen, durch die die Genauigkeit und Zuverlässigkeit der Ergebnisse nachfolgender Analysen beeinträchtigt werden könnte.

Erfindungsgemäß wird diese Aufgabe dadurch gelöst, daß
(f) durch eine Öffnung im Ofen, die zur Eingabe der Probe dient, zur Erzeugung des Unterdrucks ein Absaugrohr in den Ofen eingeführt und mit Unterdruck beaufschlagt wird.

Dabei erfolgt das Absaugen von Lösungsmitteldämpfen, Rauch und Zersetzungsprodukten, die beim Trocknen und Veraschen der Probe freigesetzt werden unmittelbar an derjenigen Stelle, an der diese Produkte entstehen, so daß ein Niederschlagen oder eine Ablagerung in kälteren Stellen des Ofens ausgeschlossen ist.

Die Erfindung kann vorteilhaft in der Weise verwirklicht werden, daß das Absaugrohr während der Aufheizung des Ofens auf die Atomisierungstemperatur und der anschließenden Messung der Atomabsorption aus der Öffnung heraus gezogen wird. Um Probenverschleppungen noch weitergehend zu vermeiden, kann das Absaugrohr anschließend an die Messung bei aufgeheiztem Ofen zum Ausheizen wieder in die Öffnung eingeführt werden. Dabei ist es weiterhin vorteilhaft, wenn das Absaugrohr während des Ausheizens mit Unterdruck beaufschlagt ist.

Eine Vorrichtung zur Durchführung des erfindungsgemäßen Verfahrens enthält
(a) einen rohrförmigen Ofen zur elektrothermischen Atomisierung von Proben mit einer Längsbohrung und einer zentralen, seitlichen Öffnung,
(b) Mittel zum Hindurchleiten eines abgestuften elektrischen Stromes durch den Ofen,
(c) Mittel zum Hindurchleiten eines Meßlichtbündels durch die Längsbohrung und einen von dem Meßlichtbündel beaufschlagten Detektor,
(d) ein durch die seitliche Öffnung in den Ofen einführbares Absaugrohr,
(e) Mittel zur Erzeugung eines Unterdruckes in dem Absaugrohr,
(f) einen Mechanismus zum Einführen des Absaugrohres in die Öffnung des Ofens und zum Herausziehen des Absaugrohres aus dem Ofen und
(g) eine Steuervorrichtung zur Koordinierung der Bewegung des Mechanismus, der Aufheizung des Rohres und der unterdruckerzeugenden Mittel.

Weiterhin kann dem Absaugrohr durch den Mechanismus nach dem Herausziehen des Absaugrohres aus der Öffnung des Ofens eine Schwenkbewegung erteilbar sein, so daß die Öffnung bei herausgezogenem Absaugrohr zur Probeneingabe freiliegt.

Ein Ausführungsbeispiel der Erfindung ist nachstehend unter Bezugnahme auf die Zugehörigen Zeichnungen näher erläutert.
- Fig.1: ist ein Längsschnitt eines querbeheizten Graphitofens mit einem Absaugrohr.
- Fig.2: ist eine Seitenansicht des Absaugrohres und eines Mechanismus zum Einführen des Absaugrohres in den Graphitofen und zum Herausziehen des Absaugrohres aus dem Graphitofen und zeigt weiterhin in schematischer Darstellung die Steuerung.
- Fig.3: ist eine auseinandergezogene Darstellung und zeigt im einzelnen das Absaugrohr und die einzelnen Bauteile des Mechanismus.
- Fig.4: ist eine Ansicht des Zylindergehäuses von links in Fig.3 gesehen.
- Fig.5: ist eine Draufsicht auf das Zylindergehäuse.
- Fig.6: ist eine Draufsicht auf ein Kopfstück, das auf dem Zylindergehäuse von Fig.4 und 5 sitzt und mit diesem verschraubt ist.

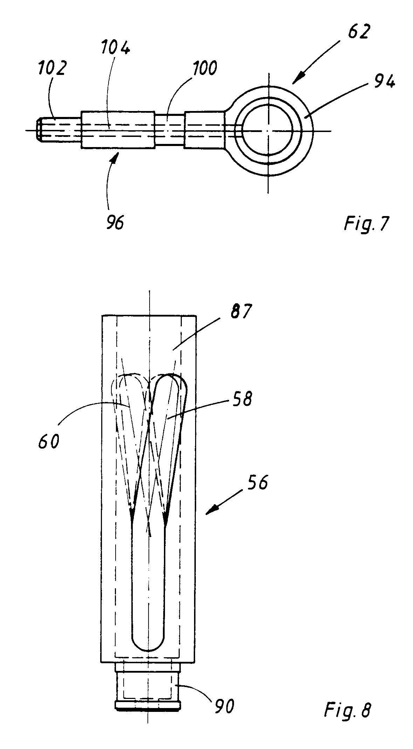

- Fig.7: ist eine Draufsicht auf einen Saugrohrträger bei dem Mechanismus von Fig.2 und 3.
- Fig.8: ist eine Seitenansicht einer auf dem Kopfstück von Fig 6 sitzenden Führungshülse von links in Fig.3 gesehen.

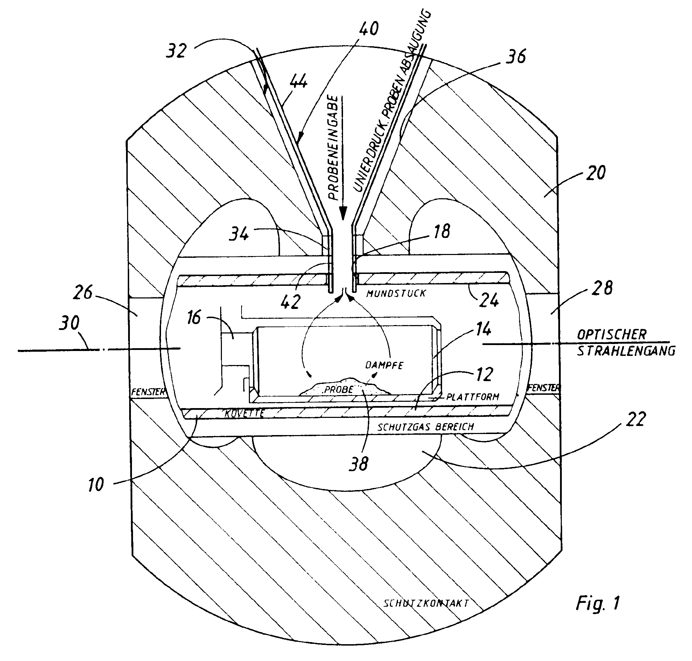

In Fig.1 ist mit 10 ein querbeheizter Graphitofen bezeichnet. Der Graphitofen kann beispielsweise etwa nach Art der EP-A-0 326 642 oder der EP-A-0 350 722 ausgebildet sein. Der Graphitofen weist einen rohrförmigen Ofenkörper 12 und eine daran angeformte halbzylindrische Plattform 14 auf. Die Plattform 14 ist bei der bevorzugten Ausführung an einem Ende über einen Steg 16 gehalten. Gegenüber der Plattform 14 ist in der Wandung des Ofenkörpers 12 eine Öffnung 18 vorgesehen. Der Graphitofen 10 ist mit radialen (nicht dargestellten) Kontaktstücken zwischen zwei Kontakten gehalten. Die Kontakte, von denen in Fig.1 ein Kontakt 20 sichtbar ist, bilden zwischen sich einen weitgehend geschlossenen Hohlraum 22, in welchem der Graphitofen 10 aufgenommen ist. In diesen Hohlraum wird über Kanäle, die in den Kontakten gebildet sind, ein Schutzgas eingeleitet. Der Graphitofen 10 weist eine Längsbohrung 24 auf. Fluchtend mit dieser Längsbohrung 24 sind in dem Kontakt 20 zwei Fenster 26 und 28 vorgesehen. Der Strahlengang des Meßlichtbündels 30 verläuft durch die Fenster 26 und 28 und die Längsbohrung 24. Quer zu der Längsbohrung 24 und fluchtend mit der in der Mitte des Ofenkörpers 12 gebildeten Öffnung 18 ist in dem Kontakt 20 eine trichterartige Öffnung 32 vorgesehen. Die Wandung der trichterartige Öffnung 32 weist einen zylindrischen Abschnitt 34 anschließend an den Hohlraum 22 und gleichachsig mit der Öffnung 18 des Graphitofens 10 und einen sich daran anschließenden, sich konisch erweiternden Abschnitt 36 auf. Durch die Öffnung 32 und die Öffnung 18 ist ein Probentropfen 38 auf die Plattform 14 aufgebracht.

In Fig.1 ist in die Öffnungen 32 und 18 die Spitze eines Absaugrohres 40 eingeführt. Die Spitze des Absaugrohres 40 enthält einen zylindrischen Abschnitt 42 und einen trichterförmigen oder Konischen Abschnitt 44. Der zylindrische Abschnitt 42 ragt koaxial durch den Abschnitt 34 der Öffnung 32 und durch die Öffnung 18 in das Innere des Graphitofens. Der zylindrische Abschnitt 42 endet unmittelbar gegenüber dem Tropfen 38 der Probe.

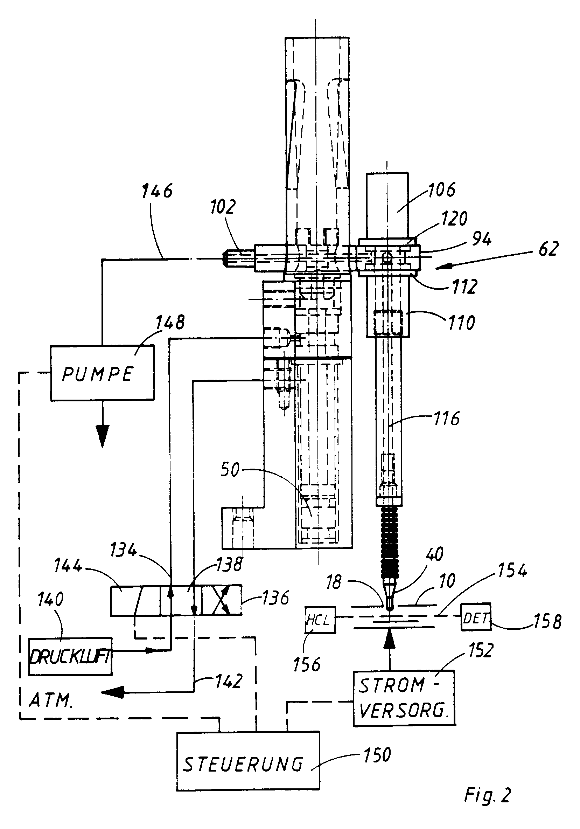

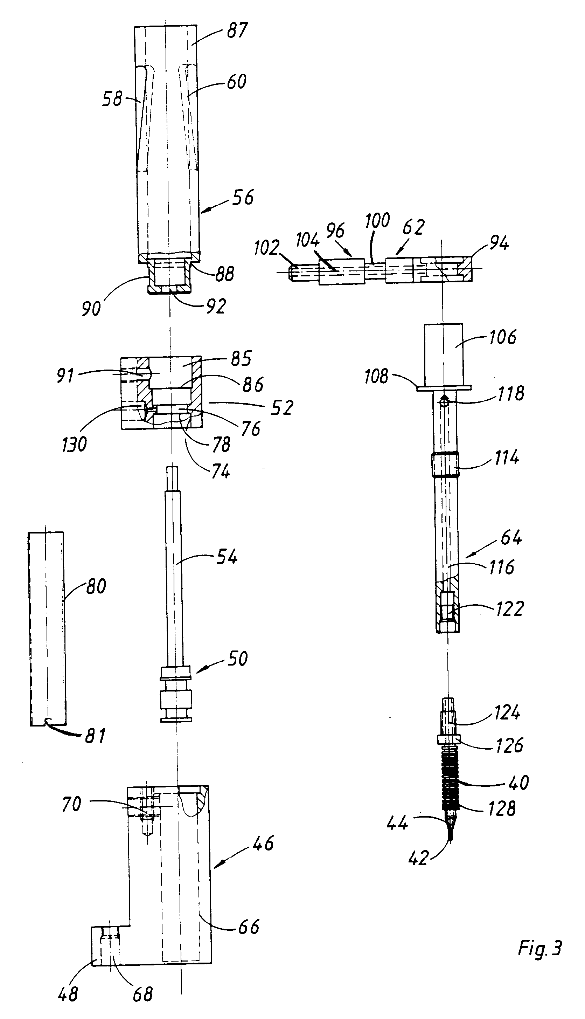

In Fig.2 und 3 ist der Mechanismus dargestellt, durch welchen das Absaugrohr 40 in die Offnung 18 des Graphitofens 10 eingeführt und aus dieser Öffnung 18 herausgezogen werden kann. Der Mechanismus enthält ein Zylindergehäuse 46. Das Zylindergehäuse 46 wird mit einem Fuß 48 auf eine plane Fläche der Ofenanordnung geschraubt. In dem Zylindergehäuse 46 ist ein Kolben 50 geführt. Das Zylindergehäuse 46 ist durch ein Kopfstück 52 abgeschlossen. Eine Kolbenstange 54 des Kolbens 50 ragt durch das Kopfstück 52 hindurch. In dem Kopfstück sitzt eine Führungshülse 56 mit zwei Führungsschlitzen 58 und 60. Die Führungsschlitze 58 und 60 liegen einander diametral gegenüber und sind gleichsinnig wendelförmig mit großer Steigung gekrümmt. In den Führungsschlitzen 58 und 60 ist ein Saugrohrträger 62 geführt. Der Saugrohrträger 62 kann durch die Kolbenstange 54 axial in der Führungshülse 56 verschoben werden. Dabei wird der Saugrohrträger 62 wegen der Krümmung der Führungsschlitze 58 und 60 gleichzeitig um die Achse der Führungshülse 56 verschwenkt. Der Saugrohrträger 62 trägt einen Saugrohrteil 64, an dessen unterem Ende das Absaugrohr 40 sitzt. Der Kolben 50 mit der Kolbenstange kann pneumatisch auf- und und abbewegt werden. Die Kolbenstange bewegt den Saugrohrträger 62, welcher den Saugrohrteil 64 und das daran sitzende Absaugrohr 40 trägt. Bei der Aufwärtsbewegung wird der Saugrohrträger 62 mit dem Saugrohrteil 64 und dem Absaugrohr 40 durch die Führungsschlitze 58 und 60 nach hinten weggeschwenkt, so daß dann die Öffnungen 32 und 18 für die Eingabe der Probe frei zugänglich sind.

Im einzelnen enthält das Zylindergehäuse 46 eine Bohrung 66. Der Fuß 48 am "unteren" Ende des Zylindergehäuses 46 weist eine Gewindebohrung 68 zur Befestigung des Zylindergehäuses 46 auf einer planen Fläche auf. Die Bohrung 66 sitzt etwas unsymmetrisch in dem Zylindergehäuse 46. An der "oberen" Stirnfläche des Zylindergehäuses 46 sind zwei Gewindebohrungen 70 und 72 vorgesehen. Diese Gewindebohrungen 70,72 gestatten die Befestigung des Kopfstückes 52.

Das Kopfstück 52 weist eine Bohrung 74 auf. Die Bohrung 74 ist ebenfalls etwas außermittig zu dem Kopfstück und gleichachsig zu der Bohrung 66 des Zylindergehäuses 46. Der Durchmesser der Bohrung 74 ist etwas kleiner als der Durchmesser der Bohrung 66. An die Bohrung 74 schließt sich eine Bohrung 76 von kleinerem Durchmesser an. Zwischen den Bohrungen 74 und 76 wird somit eine Ringschulter 78 gebildet.

Eine Zylinderhülse 80 sitzt in der Bohrung 74. Die Stirnfläche der Zylinderhülse 80 liegt an der Ringschulter 78 an. Die entgegengesetzte Stirnfläche der Zylinderhülse 80 weist Ausschnitte 81 auf. Die Zylinderhülse 80 ragt auf diese Weise in die Bohrung 66 und bildet mit der Wandung der Bohrung 74 einen Ringraum. In der Zylinderhülse ist der Kolben 50 geführt.

Neben der Bohrung 74 sind Bohrungen fluchtend mit den Gewindebohrungen 70 bzw. 72 vorgesehen. Durch diese Bohrungen sind Gewindebolzen geführt, welche in die Gewindebohrungen 70 bzw. 72 eingeschraubt sind. Dadurch wird das Kopfstück 52 mit dem Zylindergehäuse 46 verbunden.

Anschließend an die Bohrung 76 und gleichachsig mit dieser weist das Kopfstück 52 eine gestufte Bohrung 85 auf, die eine Schulter 86 bildet. In diese gestufte Bohrung ist die Führungshülse 56 eingesetzt. Die Führungshülse 56 weist einen rohrförmigen Hülsenteil 87 auf, in welchem die beiden steil-wendelförmigen Führungsschlitze 58 und 60 vorgesehen sind. Der Hülsenteil 87 ist an seinem in Fig.3 unteren Ende abgeschlossen durch einen Rand 88 und einen daran anschließenden, nach unten in Fig.3 vorspringenden topfförmigen Teil 90. Der "Boden" des topfförmigen Teils 90 weist einen zentralen Durchbruch 92 auf. In diesem Durchbruch 92 ist die Kolbenstange 54 geführt. In dem Kopfstück 52 ist im Bereich der Bohrung 85 eine radiale Gewindebohrung 91 vorgesehen. In diese Gewindebohrung 91 wird eine Klemmschraube eingeschraubt, welche die Führungshülse 56 an dem Kopfstück 52 festklemmt.

In den Führungsschlitzen 58 und 60 ist der Saugrohrträger 62 geführt. Der Saugrohrträger 62 weist einen ringförmigen Teil 94 und einen daran anschließenden Stiel 96 auf. Der ringförmige Teil 94 weist auf der Innenseite einen Bund auf. Der Stiel 96 ist mit einer Ausdrehung 100 und einem Ende 102 von vermindertem Durchmesser versehen. In dem Stiel 96 ist ein Längskanal 104 gebildet, der von der Innenwandung des ringförmigen Teils 94 ausgeht und in der Stirnfläche des Stiels 96 mündet. Die Ausdrehung und das Ende des Stiels sind in den Führungsschlitzen 58 und 60 der Führungshülse 56 geführt. Der Saugrohrträger 62 ist durch den Kolben 50 über die Kolbenstange 54 in den Führungsschlitzen 58,60 verschiebbar. Wenn der Saugrohrträger 62 nach oben in Fig.3 geschoben wird, dann wird er infolge der steil-wendelförmigen Gestalt der Führungsschlitze gleichzeitig um die Achse der Führungshülse 62 nach hinten verschwenkt.

In dem Saugrohrträger 62 sitzt ein Saugrohrteil 64. Der Saugrohrteil 64 hat zylindrische Grundform und weist einen verdickten Kopf 106 auf. An den Kopf 106 schließt sich ein Bund 108 an. Mit dem Bund 108 liegt der Saugrohrteil 62 auf dem ringförmigen Teil 94 des Saugrohrträgers 62 auf. Eine Gewindehülse 110 mit einem Flansch 112 ist auf ein Gewinde 114 des Saugrohrteils 64 aufgeschraubt und liegt auf der entgegengesetzten Seite, unten in Fig.2, an dem ringförmigen Teil 94 an. In dem Saugrohrteil 64 verläuft ein Längskanal 116. Der Längskanal 116 ist über eine Querbohrung 118 mit dem zwischen dem Bund 108 und dem Flansch 112 innerhalb des rohrförmigen Teils 94 gebildeten Ringraum 120 verbunden. Der Ringraum 120 ist gegen die Atmosphäre abgedichtet. Der Ringraum steht mit dem Längskanal 104 des Saugrohrträgers 62 in Verbindung.

Der Längskanal 116 des Saugrohrteils 64 erweitert sich an seinem Ende zu einer gestuften Gewindebohrung 122. In die Gewindebohrung 122 ist das mit einem Gewinde versehene obere Ende 124 des Absaugrohres 40 eingeschraubt. Das Ansaugrohr 40 ist aus Graphit hergestellt. Das Ansaugrohr 40 weist einen Bund 126 auf, der sich an die Stirnfläche des Saugrohrteils 64 anlegt. Weiterhin weist das Ansaugrohr 40 einen mit Rippen versehenen Abschnitt 128 auf. An den Abschnitt 128 schließt sich eine Spitze mit dem konischen Abschnitt 44 und dem zylindrischen Abschnitt 42 (Fig.1) an.

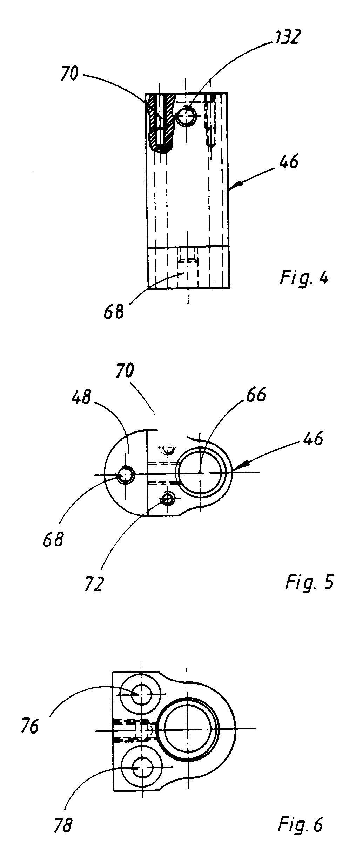

In dem Kopfstück 52 ist eine radiale Bohrung 130 vorgesehen, die einen Steuerdruckanschluß bildet. Diese Bohrung 130 steht mit dem Inneren der Zylinderhülse 80 in Verbindung und beaufschlagt den Kolben 50 von oben nach unten in Fig.2. Wie aus Fig.4 ersichtlich ist, ist am oberen Ende des Zylindergehäuses 46 zwischen den Gewindebohrungen 70 und 72 eine weitere radiale Bohrung 132 angebracht, die einen zweiten Steuerdruckanschluß bildet. Diese Bohrung 132 steht mit dem Ringraum 82 zwischen der Zylinderhülse 80 und der Wandung der Bohrung 66 in Verbindung. Druckluft, die auf diesen Steuerdruckeingang gegeben wird, strömt durch den Ringraum 82 nach unten und dann durch die Ausschnitte 81 in den unteren Zeil der Zylinderhülse 80. Diese Druckluft beaufschlagt somit den Kolben 50 von unten.

Die Bohrung 130 ist mit einem Anschluß 134 eines 4/2-Wegeventils 136 verbunden. Die Bohrung 132 ist mit einem Anschluß 138 des 4/2-Wegeventils 136 verbunden. Ein weiterer Anschluß des 4/2-Wegeventils 136 ist mit einer Druckluftquelle 140 verbunden. Der vierte Anschluß des 4/2-Wegeventils 136 ist über eine Leitung 142 mit der Atmosphäre verbunden. Das 4/2-Wegeventil 136 ist als Magnetventil ausgebildet und von einer Magnetwicklung 144 betätigbar.

Auf dem Ende 102 des Saugrohrträgers 62 sitzt ein Schlauch 146, der zu einer Saugpumpe 148 geführt ist. Die Saugpumpe 148 fördert in einen Abzug.

Eine Steuerung 150 steuert die Magnetwicklung 144, die Pumpe 148 sowie eine Stromversorgung 152 für den Graphitofen 10.

Die beschriebene Anordnung arbeitet, gesteuert von der Steuerung 150, wie folgt:

Zunächst wird das 4/2-Wegeventil 136 aus der dargestellten Schaltstellung in die andere Schaltstellung umgeschaltet. Die Druckluft wird auf die Unterseite des Kolbens 50 gegeben. Die Kolbenstange 54 drückt den Saugrohrträger 62 nach oben. Der Saugrohrträger 62 hebt dadurch den Saugrohrteil 64 aus dem Graphitofen 10 heraus. Durch die steil-wendelförmige Ausbildung der Führungsschlitze wird dabei das Absaugrohr 40 von der Öffnung 18 nach hinten weggeschwenkt. Die Öffnung 18 liegt daher frei. Es kann Probe durch die Öffnung 18 in den Graphitofen 10 dosiert werden. Die Pumpe 148 und die Stromversorgung 152 des Graphitofens 10 sind abgeschaltet.

Dann wird das 4/2-Wegeventil 136 in die dargestellte Schaltstellung umgeschaltet. Dadurch wird die Druckluft von oben auf den Kolben 50 gegeben. Der Saugrohrträger 62 wird abgesenkt. Dabei wird er zunächst nach vorn zurückgeschwenkt, so daß das Absaugrohr 40 mit der Öffnung 18 fluchtet. Dann senkt sich das Absaugrohr in der in Fig.1 dargestellten Weise in den Graphitofen 10. Das Ende des Absaugrohres 40 ist dabei direkt gegenüber der eingebrachten Probe 38 angeordnet. Es wird nun die Stromversorgung 152 so eingeschaltet, daß der Graphitofen 10 auf eine Trocknungstemperatur aufgeheizt wird. Gleichzeitig wird von der Steuerung 150 die Pumpe 148 eingeschaltet. Das Lösungsmittel in der Probe 38 verdampft. Die Lösungsmitteldämpfe werden sofort durch das Absaugrohr 40 abgesaugt. Anschließend wird bei weiterlaufender Pumpe 148 der Graphitofen 10 auf Veraschungstemperatur aufgeheizt. Dabei treten Zersetzungsprodukte als Rauch auf. Auch diese Zersetzungsprodukte werden über das Absaugrohr 40 abgesaugt.

Es ergibt sich dadurch eine Verkürzung der Trocknungs- und Veraschungszeit. Das verkürzt die Gesamtzeit, die für eine Analyse benötigt wird. Lösungsmitteldämpfe und Rauch o. dergl. werden unmittelbar von der Probe 38 abgesaugt. Sie brauchen nicht über Kontakte oder kühlere Wandungsteile des Graphitofens 10 zu streichen. Das verringert die Gefahr, daß sich Material von dem Trocknungs- und Veraschungsschritt an solchen Teilen niederschlägt und zu einer Verfälschung nachfolgender Messungen führt. Dadurch, daß der Graphitofen bei jeder Analyse während einer kürzeren Zeit aufgeheizt ist, erhöht sich die Lebensdauer des Graphitofens 10, also die Anzahl der Analysen, die mit einem Graphitofen durchgeführt werden können.

Anschließend wird die Pumpe 148 abgeschaltet. Das Ventil 136 wird in die andere Schaltstellung umgeschaltet, bei welcher Druckluft unter den Kolben 50 geleitet wird. Das Absaugrohr 40 wird wieder, wie beschrieben, aus dem Graphitofen herausgezogen und von der Öffnung 18 weggeschwenkt. Die Stromversorgung 152 wird von der Steuerung so angesteuert, daß der Graphitofen 10 auf Atomisierungstemperatur aufgeheizt wird. Es bildet sich jetzt in dem Graphitofen 10 eine Atomwolke aus. Das Meßlichtbündel 154 eines (nicht im einzelnen dargestellten) Spektrometers geht von einer Hohlkathodenlampe 156 aus, tritt durch diese Atomwolke und fällt auf einen Detektor 158. Das Spektrometer bestimmt, wieder gesteuert von der Steuerung 150, die Absorption, welche das Meßlichtbündel 154 in der Atomwolke erfährt. Daraus kann die Konzentration des gesuchten Elements bestimmt werden. Das ist bekannte Technik und daher hier nicht im einzelnen dargestellt.

Nach Durchführung der Messung bleibt der Graphitofen 10 im aufgeheizten Zustand. Er wird gegebenenfalls noch weiter auf eine Ausheiztemperatur aufgeheizt. Das Absaugrohr 40 wird mit seiner Spitze 42 in den Graphitofen 10 abgesenkt. Die Pumpe 148 bleibt eingeschaltet. Auf diese Weise wird auch die Spitze des Absaugrohres ausgeheizt. Der von der Pumpe 148 erzeugte Unterdruck sorgt dafür, daß alle bei dem Ausheizvorgang entstehenden Dämpfe abgesaugt werden.

Anschließend beginnt der beschriebene Zyklus mit einer neuen Probe von vorn.

## Patentansprüche

1. Verfahren zur Analyse von Proben mittels Atomabsorptions-Spektroskopie mit elektrothermischer Atomisierung der Probe, mit den Verfahrensschritten:
(a) Einbringen einer flüssigen Probe in einen Ofen,
(b) Aufheizen des Ofens auf eine Trocknungstemperatur zum Trocknen der Probe,
(c) anschließendes Aufheizen der Probe auf eine Atomisierungstemperatur, bei welcher sich in dem Ofen eine Atomwolke bildet, in der die Bestandteile der Probe in atomarem Zustand vorliegen, und
(d) Messung der Atomabsorption eines durch die Atomwolke hindurchgeleiteten Meßlichtbündels mit Resonanzspektrallinien eines in der Probe gesuchten Elements, wobei
(e) während des Aufheizens des Ofens auf die Trocknungstemperatur die in dem Ofen gebildeten Dämpfe durch einen Unterdruck abgesaugt werden.
**dadurch gekennzeichnet, daß**
(f) durch eine Öffnung (18) im Ofen (10), die zur Eingabe der Probe dient, zur Erzeugung des Unterdrucks ein Absaugrohr (40) in den Ofen (10) eingeführt und mit Unterdruck beaufschlagt wird.

2. Verfahren nach Anspruch 1, **dadurch gekennzeichnet,** **daß**
(a) nach dem Aufheizen des Ofens auf die Trocknungstemperatur eine Aufheizung des Ofens auf eine Veraschungstemperatur erfolgt, bei welcher eine Zersetzung von chemischen Verbindungen in der Probe erfolgt, und
(b) auch während des Aufheizens des Ofens auf die Veraschungstemperatur eine Absaugung von Rauch und Zersetzungsprodukten durch den Unterdruck erfolgt.

3. Verfahren nach Anspruch 1 oder 2, **dadurch gekennzeichnet**, **daß** das Absaugrohr (40) während der Aufheizung des Ofens (10) auf die Atomisierungstemperatur und der anschließenden Messung der Atomabsorption aus der Öffnung (18) herausgezogen wird.

4. Verfahren nach Anspruch 3, **dadurch gekennzeichnet, daß** das Absaugrohr (40) anschließend an die Messung bei aufgeheiztem Ofen (10) zum Ausheizen wieder in die Öffnung (18) eingeführt wird.

5. Verfahren nach Anspruch 4, **dadurch gekennzeichnet, daß** das Absaugrohr (40) während des Ausheizens mit Unterdruck beaufschlagt ist.

6. Vorrichtung zur Durchführung des Verfahrens nach Anspruch 1, enthaltend:
(a) einen rohrförmigen Ofen (10) zur elektrothermischen Atomisierung von Proben mit einer Längsbohrung (24) und einer zentralen, seitlichen Öffnung (18),
(b) Mittel (152) zum Hindurchleiten eines abgestuften elektrischen Stromes durch den Ofen (10),
(c) Mittel zum Hindurchleiten eines Meßlichtbündels durch die Längsbohrung (24) und einen von dem Meßlichtbündel beaufschlagten Detektor,
**gekennzeichnet durch**
(d) ein durch die seitliche Öffnung (18) in den Ofen (10) einführbares Absaugrohr (40),
(e) Mittel (148) zur Erzeugung eines Unterdruckes in dem Absaugrohr (40),
(f) einen Mechanismus zum Einführen des Absaugrohres (40) in die Öffnung (18) des Ofens (10) und zum Herausziehen des Absaugrohres (40) aus dem Ofen (10) und
(g) eine Steuervorrichtung (150) zur Koordinierung der Bewegung des Mechanismus, der Aufheizung des Graphitofens (10) und der unterdruckerzeugenden Mittel (148).

7. Vorrichtung nach Anspruch 6, **dadurch gekennzeichnet, daß** dem Absaugrohr (40) durch den Mechanismus nach dem Herausziehen des Absaugrohres (40) aus der Öffnung (18) des Ofens (10) eine Schwenkbewegung erteilbar ist, so daß die Öffnung (18) bei herausgezogenem Absaugrohr (40) zur Probeneingabe freiliegt.

8. Vorrichtung nach Anspruch 7, **dadurch gekennzeichnet, daß** der Mechanismus zum Bewegen des Absaugrohres (40)
(a) eine Führungshülse (56) enthält, welche zwei diametral gegenüberliegende, steil-wendelförmig verlaufende Führungsschlitze (58,60) aufweist, sowie
(b) einen Saugrohrträger (62), der in den Führungsschlitzen (58,60) geführt ist und das Absaugrohr (40) trägt, und
(c) Mittel (50,136,140) zum Verstellen des Saugrohrträgers (62) längs der Führungshülse (56), wobei die Längsbewegung infolge der Krümmung der Führungsschlitze (58,60) mit einer Schwenkbewegung um die Achse der Führungshülse verbunden ist.

9. Vorrichtung nach Anspruch 8, **dadurch gekennzeichnet, daß**
(a) der Saugrohrträger (62) einen ringförmigen Teil (94) und einen daran angeformten Stiel (96) aufweist,
(b) der Stiel (96) in den Führungsschlitzen (58,60) geführt ist und
(c) das Absaugrohr (40) an dem ringförmigen Teil (94) gehaltert ist.

10. Vorrichtung nach Anspruch 9, **dadurch gekennzeichnet**, **daß** in dem ringförmigen Teil (94) ein zylindrischer Saugrohrteil (64) gehaltert ist, der an seinem Ende das in den Ofen einzuführende Absaugrohr (40) trägt.

11. Vorrichtung nach Anspruch 10, **dadurch gekennzeichnet, daß** das Absaugrohr (40) aus Graphit besteht.

12. Vorrichtung nach Anspruch 10 oder 11, **dadurch gekennzeichnet, daß** das Absaugrohr (40) ein konisch sich verjüngendes Ende (44) aufweist, an welches sich ofenseitig eine zylindrisch-rohrförmige Spitze (42) anschließt.

13. Vorrichtung nach Anspruch 12, **dadurch gekennzeichnet, daß** das Absaugrohr (40) einen mit Rippen versehenen Abschnitt (128) aufweist.

14. Vorrichtung nach einem der Ansprüche 10 bis 13, **dadurch gekennzeichnet, daß**
(a) miteinander verbundene Längskanäle (124,116) durch das Absaugrohr (40) und den Saugrohrteil (64) verlaufen,
(b) ein Längskanal (104) durch den Stiel (96) des Saugrohrträgers (62) verläuft und in der Innenwandung des ringförmigen Teils (94) mündet,
(c) der Längskanal des Saugrohrteils (64) mit dem Längskanal (104) des Stiels (96) in Verbindung steht und
(d) der Längskanal (104) des Stiels (96) über eine Schlauchverbindung (146) mit der Saugpumpe (148) verbunden ist.

15. Vorrichtung nach Anspruch 14, **dadurch gekennzeichnet**, **daß**
(a) der Saugrohrträger (62) mit einem Bund (108) auf einer Seite an dem ringförmigen Teil (94) anliegt und sich durch die Öffnung dieses ringförmigen Teils (94) erstreckt,
(b) eine Gewindehülse (110) auf den Saugrohrteil (64) aufgeschraubt ist und mit einem Flansch (112) auf der gegenüberliegenden Seite an dem ringförmigen Teil (94) anliegt, so daß innerhalb des ringförmigen Teils (94) und um den Saugrohrteil (64) herum ein abgeschlossener Ringraum gebildet ist,
(c) der Längskanal (116) des Saugrohrteils (64) über eine Querbohrung (118) mit diesem Ringraum in Verbindung steht und
(d) der Längskanal (104) des Stiels (96) in diesem Ringraum mündet.

16. Vorrichtung nach einem der Ansprüche 8 bis 15, **dadurch gekennzeichnet, daß** die Mittel zum Verstellen des Saugrohrträgers (62) längs der Führungshülse (56) einen pneumatisch beaufschlagten Kolben (50) aufweisen.

17. Vorrichtung nach Anspruch 16, **dadurch gekennzeichnet, daß** die Mittel zum Verstellen des Saugrohrträgers (62) längs der Führungshülse (56)
(a) ein Zylindergehäuse (46) mit einer Bohrung (66) enthalten sowie
(b) eine an einem Ende koaxial in der Bohrung (66) des Zylindergehäuses (46) gehaltene Zylinderhülse (80), in welcher der Kolben gleitet, wobei die Halterung (52) der Zylinderhülse (80) den zwischen der Wandung der Bohrung (66) und der Zylinderhülse (80) gebildeten Ringraum von dem auf einer Seite des Kolbens (50) liegenden Innenraum der Zylinderhülse (80) trennt und der Ringraum weiterhin über Ausschnitte (81) der Zylinderhülse (80) mit dem auf der anderen Seite des Kolbens liegenden Innenraum der Zylinderhülse (80) in Verbindung steht und
(c) Steuerdruckmittel über Anschlüsse (130,132) und ein Ventil (136) wahlweise auf den Ringraum oder auf den auf der besagten einen Seite des Kolbens (50) liegenden Innenraum aufschaltbar ist.

18. Vorrichtung nach Anspruch 17, **dadurch gekennzeichnet, daß** die Führungshülse (56) gleichachsig mit der Zylinderhülse (80) mit dem Zylindergehäuse (46) verbunden ist.

## Claims

1. A method of analysing samples by atomic absorption spectroscopy with electrothermal atomisation of the sample, comprising the following steps:
(a) inserting a liquid sample into a furnace,
(b) heating the furnace to a drying temperature for drying the sample,
(c) subsequently heating the sample to an atomisation temperature, at which a cloud of atoms containing the constituents of the sample in an atomic state is formed in the furnace, and
(d) measuring the atomic absorption of a measuring light beam directed through the atom cloud and containing resonance spectrum lines of an element searched for in the sample, and
(e) during heating of the furnace to the drying temperature, the vapours formed in the furnace are sucked away by negative pressure
characterised in that
(f) a suction pipe (40) for producing negative pressure is inserted into the furnace (10) through an opening (18) used for inserting the sample into the furnace (10), and is supplied with negative pressure.

2. A method according to claim 1, characterised in that
(a) after the furnace has been heated to the drying temperature, the furnace is heated to an incineration temperature at which chemical compounds in the sample are decomposed and
(b) smoke and decomposition products are sucked away by the negative pressure also during heating-up of the furnace to the incineration temperature.

3. A method according to claim 1 or 2, characterised in that the suction pipe (40) is pulled out of the opening (18), during heating of the furnace (10) to the atomisation temperature and subsequent measurement of the atomic absorption.

4. A method according to claim 3, characterised in that after the measurement when the furnace (10) is heated, the suction pipe (40) is re-inserted into the opening (18) for baking out.

5. A method according to claim 4, characterised in that the suction pipe (40) is operated at negative pressure during baking out.

6. Apparatus for working the method according to claim 1, comprising:
(a) a tubular furnace (10) for electrothermal atomisation of samples and formed with a longitudinal bore (24) and a central lateral opening (18),
(b) means (152) for conveying a graduated electric current through the furnace (10) and
(c) means for conveying a measuring light beam through the longitudinal bore (24) and through a detector acted upon by the beam,
characterised by
(d) a suction pipe (40) for insertion through the lateral opening (18) into the furnace (10),
(e) means (148) for generating a negative pressure in the suction pipe (40),
(f) a mechanism for inserting the suction pipe (40) into the opening (18) in the furnace (10) and for pulling the suction pipe (40) out of the opening (10), and
(g) a control device (150) for co-ordinating the motion of the mechanism, the process of heating the graphite furnace (10), and the negative pressure-producing means (148).

7. Apparatus according to claim 6, characterised in that after being pulled out of the opening (18) of the furnace (10), the suction pipe (40) is swivelled by the mechanism, so that when the suction pipe (40) has been pulled out, the opening (18) is free for inserting a sample.

8. Apparatus according to claim 7, characterised in that the mechanism for moving the suction pipe (40) comprises
(a) a guide sleeve (56) formed with two diametrically opposite steeply helical guide slots (58, 60),
(b) a suction-pipe holder (62) which is guided in the guide slots (58, 60) and holds the suction pipe (40), and
(c) means (50, 136, 140) for adjusting the suction-pipe holder (62) along the guide sleeve (56), the longitudinal motion being associated with swivelling motion around the axis of the guide sleeve owing to the curvature of the guide slots (58, 60).

9. Apparatus according to claim 8, characterised in that
(a) the suction-pipe holder (62) has an annular part (94) and an integrally-formed shank (96),
(b) the shank (96) is guided in the guide slots (58, 60), and
(c) the suction pipe (40) is held against the annular part (94).

10. Apparatus according to claim 9, characterised in that a cylindrical suction-pipe part (64) is held in the annular part (94) and at its end bears the suction pipe (40) for insertion into the furnace.

11. Apparatus according to claim 10, characterised in that the suction pipe (40) is made of graphite.

12. Apparatus according to claim 10 or 11, characterised in that the suction pipe (40) has a conically tapering end (44) adjacent a cylindrical tubular tip (42) on the furnace side.

13. Apparatus according to claim 12, characterised in that the suction pipe (40) has a ribbed portion (128).

14. Apparatus according to any of claims 10 to 13, characterised in that
(a) interconnected longitudinal ducts (124, 116) extend through the suction pipe (40) and the suction-pipe part (64),
(b) a longitudinal duct (104) extends through the shank (96) of the suction-pipe holder (62) and opens in the inner wall of the annular part (94),
(c) the longitudinal duct in the suction-pipe part (64) is connected to the longitudinal duct (104) in the shank (96) and
(d) the longitudinal duct (104) in the shank (96) is connected by a hose connection (146) to the suction pump (148).

15. Apparatus according to claim 14, characterised in that
(a) the suction-pipe holder (62) has a collar (108) which bears on one side against the annular part (94) and extends through the opening therein,
(b) a threaded sleeve (110) is screwed on to the suction-pipe part (64) and, via a flange (112) on the opposite end, abuts the annular part (94), so that a closed annular space is formed inside the annular part (94) and around the suction-pipe part (64),
(c) the longitudinal duct (116) in the suction-pipe part (64) is connected by a transverse bore (118) to the said annular space, and
(d) the longitudinal duct (104) in the shank (96) opens into the annular space.

16. Apparatus according to any of claims 8 to 15, characterised in that the means for adjusting the suction-pipe holder (62) along the guide sleeve (56) comprise a pneumatic piston (50).

17. Apparatus according to claim 16, characterised in that the means for adjusting the suction-pipe holder (62) along the guide sleeve (56) comprise
(a) a cylindrical casing (46) formed with a bore (66),
(b) a cylindrical sleeve (80) held coaxially at one end in the bore (66) in the cylindrical casing (46), the piston sliding in the cylindrical sleeve, and the holder (52) of the cylindrical sleeve (80) separates the annular space formed between the cylindrical sleeve (80) and the wall of bore (66) from the interior of the cylindrical sleeve (80) on one side of the piston (50), and the annular space is also connected via portions (81) of the cylindrical sleeve (80) to the interior of the cylindrical sleeve (80) on the other side of the piston, and
(c) pressure control means can be switched via connections (130, 132) and a valve (136) either to the annular space or to the interior on the said one side of the piston (50).

18. Apparatus according to claim 17, characterised in that the guide sleeve (56) is connected coaxially with the cylindrical sleeve (80) to the cylindrical casing (46).

## Revendications

1. Procédé pour l'analyse d'échantillons par spectroscopie par absorption atomique où l'atomisation de l'échantillon a lieu par voie électrothermique, comprenant les étapes de procédé suivantes :
(a) introduction d'un échantillon liquide dans un four,
(b) chauffage du four jusqu'à une température de séchage en vue de sécher l'échantillon,
(c) chauffage consécutif de l'échantillon jusqu'à une température d'atomisation à laquelle il se forme dans le four un nuage d'atomes dans lequel les constituants de l'échantillon sont présents à l'état atomique, et :
(d) mesure de l'absorption atomique d'un faisceau lumineux de mesure que l'on fait passer à travers le nuage d'atomes et qui contient des raies spectrales de résonance d'un élément recherché dans l'échantillon, cependant que :
(e) pendant le chauffage du four jusqu'à la température de séchage, les vapeurs formées dans le four sont aspirées par une dépression,
caractérisé par le fait que :
(f) en vue d'engendrer la dépression, on introduit un tube d'aspiration (40) dans le four (10) par une ouverture (18) qui est ménagée dans le four (10) et qui sert à faire entrer l'échantillon, et on le soumet à une dépression.

2. Procédé selon la revendication 1, caractérisé par le fait que :
(a) après le chauffage du four jusqu'à la température de séchage, un chauffage du four a lieu jusqu'à une température d'incinération à laquelle se produit une décomposition des composés chimiques contenus dans l'échantillon, et :
(b) une aspiration des fumées et des produits de décomposition a lieu du fait de la dépression, même pendant le chauffage du four jusqu'à la température d'incinération.

3. Procédé selon la revendication 1 ou 2, caractérisé par le fait que l'on retire le tube d'aspiration (40) de l'ouverture (18) pendant le chauffage du four (10) jusqu'à la température d'atomisation et pendant la mesure consécutive de l'absorption atomique.

4. Procédé selon la revendication 3, caractérisé par le fait que l'on introduit à nouveau le tube d'aspiration (40) dans l'ouverture (18) à la suite de la mesure, le four (10) étant chauffé.

5. Procédé selon la revendication 4, caractérisé par le fait que l'on soumet le tube d'aspiration (40) à une dépression pendant le chauffage.

6. Dispositif pour la mise en oeuvre du procédé selon la revendication 1, comprenant :
(a) un four tubulaire (10) destiné à l'atomisation des échantillons par voie électrothermique et comprenant un perçage longitudinal (24) et une ouverture centrale latérale (18),
(b) des moyens (152) pour faire passer un courant électrique gradué à travers le four (10),
(c) des moyens pour faire passer un faisceau lumineux de mesure à travers le perçage longitudinal (24) et à travers un détecteur soumis à l'action du faisceau lumineux de mesure,
caractérisé par :
(d) un tube d'aspiration (40) qui peut être introduit dans le four (10) par l'ouverture latérale (18),
(e) des moyens (148) pour engendrer une dépression dans le tube d'aspiration (40),
(f) un mécanisme pour introduire le tube d'aspiration (40) dans l'ouverture (18) du four (10) et pour retirer le tube d'aspiration (40) du four (10), et :
(g) un dispositif de commande (150) pour coordonner le déplacement du mécanisme, le chauffage du four en graphite (10) et les moyens (148) qui engendrent la dépression.

7. Dispositif selon la revendication 6, caractérisé par le fait qu'après que le tube d'aspiration (40) a été retiré de l'ouverture (18) du four (10), le mécanisme peut impartir au tube d'aspiration (40) un mouvement de pivotement, de sorte que, lorsque le tube d'aspiration (40) est retiré, l'ouverture (18) est dégagée en vue de faire entrer l'échantillon.

8. Dispositif selon la revendication 7, caractérisé par le fait que le mécanisme destiné à déplacer le tube d'aspiration (40) :
(a) comprend un manchon de guidage (56) qui présente deux fentes de guidage (58, 60) diamétralement opposées, lesquelles s'étendent en forme d'hélices à pente raide, ainsi que :
(b) un support de tube d'aspiration (62) qui est guidé dans les fentes de guidage (58, 60) et qui porte le tube d'aspiration (40), et :
(c) des moyens (50, 136, 140) pour déplacer le support (62) du tube d'aspiration le long du manchon de guidage (56), cependant que, du fait de la courbure des fentes de guidage (58, 60), le déplacement longitudinal est lié à un déplacement en pivotement autour de l'axe du manchon de guidage.

9. Dispositif selon la revendication 8, caractérisé par le fait que :
(a) le support (62) du tube d'aspiration présente une partie annulaire (94) et une tige (96) formée sur celle-ci,
(b) la tige (96) est guidée dans les fentes de guidage (58, 60), et :
(c) le tube d'aspiration (40) est maintenu sur la partie annulaire (94).

10. Dispositif selon la revendication 9, caractérisé par le fait qu'est maintenue dans la partie annulaire (94) une partie cylindrique (64) du tube d'aspiration, celle-ci portant à son extrémité le tube d'aspiration (40) qui est destiné à être introduit dans le four.

11. Dispositif selon la revendication 10, caractérisé par le fait que le tube d'aspiration (40) est constitué par du graphite.

12. Dispositif selon la revendication 10 ou 11, caractérisé par le fait que le tube d'aspiration (40) présente une extrémité (44) qui se rétrécit en cône et à laquelle une pointe (42) en forme de tube cylindrique se raccorde du côté du four.

13. Dispositif selon la revendication 12, caractérisé par le fait que le tube d'aspiration (40) présente une partie (128) qui est pourvue d'ailettes.

14. Dispositif selon l'une des revendications 10 à 13, caractérisé par le fait que :
(a) des canaux longitudinaux (124, 116) reliés entre eux s'étendent à travers le tube d'aspiration (40) et à travers la partie (64) du tube d'aspiration,
(b) un canal longitudinal (104) s'étend à travers la tige (96) du support (62) du tube d'aspiration, et il débouche dans la paroi intérieure de la partie annulaire (94),
(c) le canal longitudinal de la partie (64) du tube d'aspiration est en liaison avec le canal longitudinal (104) de la tige (96), et :
(d) le canal longitudinal (104) de la tige (96) est relié à la pompe d'aspiration (148) par l'intermédiaire d'une liaison par tuyau (146).

15. Dispositif selon la revendication 14, caractérisé par le fait que :
(a) le support (62) du tube d'aspiration porte par un collet (108) sur un côté de la partie annulaire (94), et il s'étend à travers l'ouverture de cette partie annulaire (94),
(b) un manchon fileté (110) est vissé sur la partie (64) du tube d'aspiration, et il porte par une bride (112) sur le côté opposé de la partie annulaire (94), de sorte qu'un espace annulaire fermé est formé à l'intérieur de la partie annulaire (94) et tout autour de la partie (64) du tube d'aspiration,
(c) le canal longitudinal (116) de la partie (64) du tube d'aspiration est en liaison avec cet espace annulaire par l'intermédiaire d'un perçage transversal (118), et :
(d) le canal longitudinal (104) de la tige (96) débouche dans cet espace annulaire.

16. Dispositif selon l'une des revendications 8 à 15, caractérisé par le fait que les moyens pour déplacer le support (62) du tube d'aspiration le long du manchon de guidage (56) comprennent un piston (50) actionné par voie pneumatique.

17. Dispositif selon la revendication 16, caractérisé par le fait que les moyens pour déplacer le support (62) du tube d'aspiration le long du manchon de guidage (56) :
(a) comprennent un corps de cylindre (46) pourvu d'un alésage (66), ainsi que :
(b) un manchon de cylindre (80) qui est maintenu coaxialement à une extrémité dans l'alésage (66) du corps de cylindre (46) et dans lequel glisse le piston, cependant que l'organe de maintien (52) du manchon de cylindre (80) sépare l'espace annulaire formé entre la paroi de l'alésage (66) et le manchon de cylindre (80) du volume intérieur du manchon de cylindre (80) qui est situé d'un premier côté du piston (50), et que l'espace annulaire est en outre en liaison, par l'intermédiaire d'évidements (81) du manchon de cylindre (80), avec le volume intérieur du manchon de cylindre (80) qui est situé de l'autre côté du piston, et :
(c) un moyen à pression de commande peut être raccordé au choix, par l'intermédiaire de raccords (130, 132) et d'une valve (136), à l'espace annulaire ou au volume intérieur qui est situé dudit premier côté du piston (50).

18. Dispositif selon la revendication 17, caractérisé par le fait que le manchon de guidage (56) est relié au corps de cylindre (46) en ayant le même axe que le manchon de cylindre (80).
